# EUROPEAN PATENT SPECIFICATION

(11) **EP 0 405 973 B1**
(45) Date of publication and mention of the grant of the patent: **07.12.1994**
(21) Application number: 90307082.9
(22) Date of filing: 28.06.1990
(51) Int. Cl.: G01N 27/00, G01L 5/00

(54) **Scanning tunnelling microscope in combination with an optical microscope**
Raster-Tunnel-Mikroskop in Kombination mit einem optischen Mikroskop
Microscope à effet tunnel en combinaison avec un microscope optique

(30) Priority: 29.06.1989 JP 167760/89
(43) Date of publication of application: 02.01.1991
(73) Proprietor: SEIKO INSTRUMENTS INC., Tokyo 136 (JP)
(72) Inventor: Ishihara, Kenichi c/o Seiko Instruments Inc., Koto-ku Tokyo (JP)
(74) Representative: Sturt, Clifford Mark

(56) References cited:
- EP-A- 0 331 148
- EP-A- 0 406 413
- WO-A-89/01603
- JOURNAL OF VACUUM SCIENCE AND TECHNOLOGY: PART A. vol. 6, no. 2, April 1988,NEW YORK US pages 383 - 385; Guckenberger R. et al.: "Design of STM for biological applications"
- IBM TDB 30,1987,pp 369-370

## Description

This invention relates to scanning tunnelling microscopes in combination with optical microscopes, for example, for use as surface roughness gauges.

One known scanning tunnelling microscope has a probe needle which is scanned along a sample surface in the direction of the plane of the sample while maintaining a fixed distance between the sample surface and the needle. Utilising the tunnel effect, an atomic image of the sample surface or three-dimensional micro-structure of the sample surface can be determined from the spacial height of the needle. The distance between the sample surface and the needle must be held constant in the order of nanometers to effect flow of tunnel current. Hence, the practical area of visual observation is limited at most to several micrometers. For this reason, in order to observe a particular spot on the sample surface, a supplementary observation instrument, such as an optical microscope, needs to be combined with the scanning tunnelling microscope.

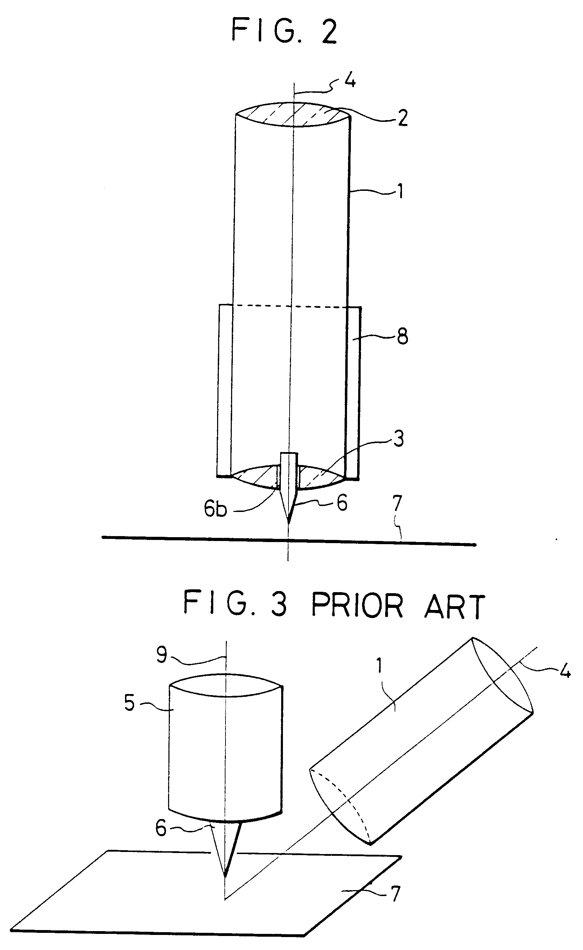

Figure 3 shows a first conventional combination of a scanning tunnelling microscope and an optical microscope. A probe needle 6 is scanned in the plane of a sample surface 7, and is attached to a three-axis micro-drive mechanism 5, operative to enable the needle to undergo vertical movement so as to maintain a constant vertical distance between itself and the sample surface 7. An axis 9 which is the centre axis of the needle 6 is inclined with respect to an optical axis 4 of an optical microscope 1 such that concurrent observation can be carried out by the scanning tunnelling microscope and the optical microscope.

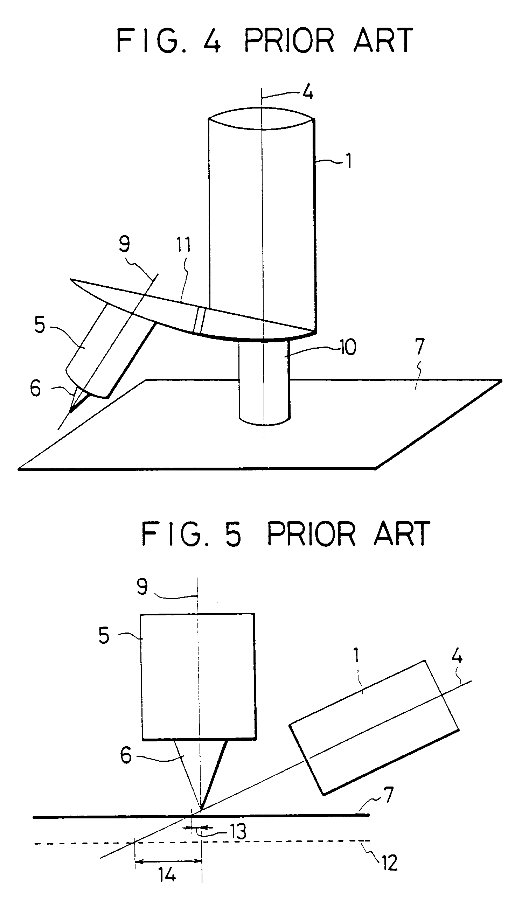

Figure 4 shows a second conventional combination of a scanning tunnelling microscope and an optical microscope. A turntable 11 has two or more objective lens 10 of different optical powers mounted thereon. A three-axis micro-drive mechanism 5, similar to that referred to in Figure 3, is mounted on the turntable 11 such that the optical axis 4 of the optical microscope 1 and the axis 9 of the needle 6, attached to the three-axis micro-drive mechanism 5, may be selectively to be moved to coincide with a common axis.

However, with regard to the conventional combination of scanning tunnelling microscope and optical microscope shown in Figure 3, the axis 9 and the optical axis 4 are angularly offset from each other. Therefore, as illustrated in Figure 5, there is the drawback that when the distance between the sample surface 7 and the needle 6 is varied a spot position on the sample surface 7 pointed to by a tip of the needle 6 is shifted as indicated by numerals 13 and 14 when viewed through the optical microscope 1. Therefore, when advancing the needle 6 from a rest position level 12 to the sample surface 7 for observation by the scanning tunnelling microscope, a particular spot position on the sample surface 7 pointed to the tip of the needle 6 cannot be correctly observed by optical microscope 1 due to view angle difference. Further, the optical microscope 1 has a relevantly poor resolution power as compared to the dimension of the tip of the needle 6, and so the optical microscope 1 cannot accurately image the actual tip of the needle 6. For these reasons, the optical microscope 1 cannot effect accurate alignment of the axis 9 to a target spot.

With regard to the conventional combination of scanning tunnelling microscope and optical microscope shown in Figure 4, the combination is constructed such that the axis 9 and the optical axis 4 may be moved selectively to coincide with use of the turntable 11. Therefore, concurrent observation is impossible, hence adjustment has to be carried out for the axis 9 each time the needle is replaced. Further, mechanical accuracy must be ensured for switching of the turntable 11. For these reasons, considerable adjustment work is needed each time the needle 6 is replaced and highly accurate machining is also needed for the turntable 11 so as to effect accurate alignment of a target spot by the optical microscope.

The above noted problems are caused by either the fact that the axis of the needle of the scanning tunnelling microscope is not aligned with the optical axis of the optical microscope or the fact that concurrent observation by the scanning tunnelling microscope and the optical microscope is not possible.

In IBM Technical Disclosure Bulletin vol. 30, No. 5, October 1987, pages 369-370, New York, U.S.; "Optically transparent tip for tunnelling microscopy", there is disclosed a scanning tunnelling microscope in combination with an optical microscope in which the probe needle of the scanning tunnelling microscope is disposed in alignment with the optical axis of the optical microscope.

In EP-A-0331148, which is not a prior publication, the optical microscope has an objective lens formed with a central opening, the objective lens being provided at one end of a lens sleeve device on which an electrostriction element of the scanning tunnelling microscope is mounted, the probe needle being mounted in the central opening in the objective lens.

In EP-A-0406413, which is also not a prior publication, the optical microscope has a lens sleeve, there being an objective lens of the optical microscope which is provided at one end of the lens sleeve and which is formed with a central opening through which the probe needle extends.

According to the present invention there is provided a scanning tunnelling microscope in combination with an optical microscope, a probe needle of the scanning tunnelling microscope being disposed in alignment with the optical axis of the optical microscope, characterised in that the optical microscope has a lens sleeve and an objective lens provided at one end of the lens sleeve and formed with a central opening, an electrostriction element of the scanning tunnelling microscope being mounted in the opening and carrying the needle.

The optical axis of the optical microscope is the centre line of the optical path, and an observed image is formed of not only the optical beam along the optical axis, but also optical beams through the entire cross section of the optical path. Therefore, when an obstacle blocks a part of the optical path on the optical axis, the observed image is only darkened to the extent that a part of the optical path is blocked. By utilising this phenomenon, the needle and/or its three-dimensional micro-drive mechanism of the scanning tunnelling microscope, are disposed in a part of the optical path of the optical microscope in alignment with the optical axis.

In such a construction, the scanning tunnelling microscope and the optical microscope are coaxially aligned with each other so as to enable concurrent observations, thereby to effect accurate alignment of a target spot of the scanning tunnelling microscope by the optical microscope.

The electrostriction element may have a portion connected to driving electrode means and a portion fixed in the opening of the object lens.

In one embodiment, the optical microscope has a lens sleeve and an objective lens provided at one end of the lens sleeve and formed with a central opening, an electrostriction element of the scanning tunnelling microscope being mounted on the lens sleeve, the needle being mounted in the opening of the objective lens.

The invention is illustrated, by way of example, in the accompanying drawings, in which:-
Figure 1(a) shows a first embodiment of a combination according to the present invention of an optical microscope and a scanning tunnelling microscope;
Figure 1(b) shows a modification of the first embodiment shown in Figure 1(a):
Figure 2 shows a second embodiment of a combination according to the present invention of an optical microscope and a scanning tunnelling microscope;
Figure 3 shows a first a conventional combination of an optical microscope and a scanning tunnelling microscope;
Figure 4 shows a second conventional combination of an optical microscope and an scanning tunnelling microscope; and
Figure 5 is explanatory diagram illustrating the drawback of the first conventional combination of optical microscope and scanning tunnelling microscope.

Throughout the drawings like parts have been designated by the same reference numerals.

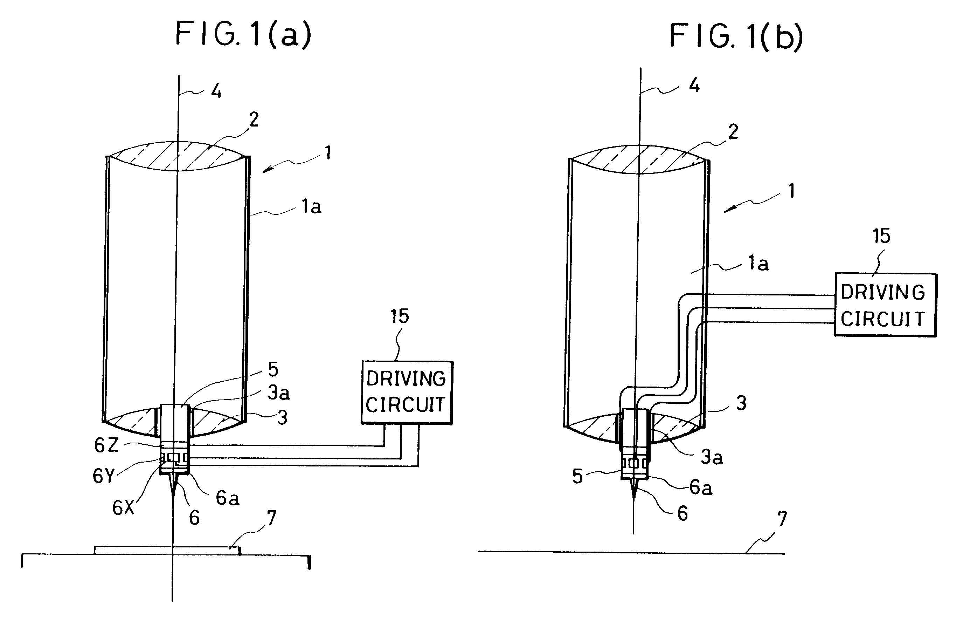

Figure 1(a) illustrates a first embodiment of a combination according to the present invention of a scanning tunnelling microscope and an optical microscope 1. The optical microscope 1 is provided with a lens sleeve 1a. An eyepiece 2 is attached to one end of the lens sleeve and an objective lens 3 is attached to the other end. The objective lens 3 is formed centrally with an opening 3a. In other words, the objective lens 3 has a hollow structure such that a central part thereof is removed around an optical axis 4. The opening 3a of the hollow objective lens 3 accommodates a three-axis micro-drive mechanism 5 of the scanning tunnelling microscope effective to enable a probe needle 6 to follow vertically a sample surface 7 so as to scan the needle 6 along the sample surface 7 in the plane thereof thereby to maintain constant the distance between the needle 6 and the sample surface. The three-axis micro-drive mechanism 5 is composed of a cylindrical electrostriction element which is provided with X-, Y- and Z-drive electrodes 6X, 6Y, 6Z. The electrodes are connected to a driving circuit 15 which applies an appropriate driving voltage. The electrostriction element is fixed at its upper end, which is spaced from the drive electrodes, to the objective lens 3 by adhesive. The micro-drive mechanism 5 supports, at its lower end, an attachment piece 6a. The needle 6, i.e., the measurement needle of the scanning tunnelling microscope is fixed to the attachment piece 6a by a screw or other fitting. The axis of the scanning tunnelling microscope or the centre axis of the needle 6 is coaxially aligned with the optical axis 4 or the centre axis of the optical pass of the optical microscope 1.

Figure 1(b) shows a modification of a combination shown in Figure 1(a) in which driving lead wire of the electrostriction element 5 are arranged through the opening 3a of the objective lens 3 and inside the lens sleeve 1a.

In the above described embodiment of the present invention, the sample surface 7 is advanced towards the needle 6 by means of a displacement device (not shown) so that the needle 6 is in the tunnelling region and a target spot is observed by the scanning tunnelling microscope. In this position, the focal depth of the optical microscope 1 is adjusted to enable the optical microscope to observe clearly the sample surface 7. In this state, the image observed through the optical microscope 1 becomes proportionally dark because light is blocked by the micro-drive mechanism 5. However, the micro-drive mechanism 5 itself is never observed because it is positioned away from the sample surface 7 i.e. is out of the focal plane.

Further, when the sample surface 7 approaches the needle 6 in the tunnelling range, its distance is of the order of nanometers. On the other hand, the optical microscope has a focal depth at least of the order of several micrometers. Accordingly, in the condition where the sample surface 7 and the needle 6 approach each other in the tunnelling range and the focus of the optical microscope is adjusted to the sample surface, a tip end and vicinity thereof of the needle 6 can be observed by the optical microscope. However, the tip end of the needle 6 is far smaller that the actual resolving power of the optical microscope 1, so actual observation of tip end of the needle cannot be effected by the optical microscope 1. Instead, the needle has a conical peripheral portion adjacent to the tip end of the order of several micrometers and sufficient diameter to be observed by the optical microscope. Therefore, this peripheral portion can be clearly observed, since it is within the focal depth of the optical microscope. The image of this conical peripheral portion of the needle 6 is observed by the optical microscope 1 in superposed relation to the image of the initially focused sample surface 7. Observation of the scanning tunnelling microscope is effected on to the superposed image portion of the sample surface 7 to which the tip end of the needle 6 is pointed.

With regard to horizontal offset of the tip end of the needle 6 in a direction parallel to the sample surface 7, which would occur everytime the needle 6 was replaced, this offset is limited normally within the observation field of the optical microscope and the centre axis of the needle which is not substantially inclined relative to the optical axis 4. Therefore, in similar manner to the case where the axis of the scanning tunnelling microscope is exactly coaxial with the optical axis 4, the shadow image of the needle 6 obtained by the optical microscope 1 in superposed relation to the image of the sample surface is effective to designate to a target spot of observation by the scanning tunnelling microscope.

In this embodiment, the micro-drive mechanism 5 does not drive the objective lens 3, but only drives the needle 6 so that the electrostriction element of the micro-drive mechanism 5 does not receive an excessive load. This reduces inertia during driving of the electrostriction element to effect accurate scanning of the needle.

Figure 2 illustrates another embodiment of a combination according to the present invention of optical microscope and scanning tunnelling microscope. The needle 6 is arranged in opposed relation to the sample surface 7 and is scanned in the plane thereof. Further, a cylindrical three-axis micro-drive mechanism 8 is provided to enable the needle 6 to follow vertically the contours of the sample surface 7 to maintain a constant distance between the sample surface and the needle 6. The micro-drive mechanism 8 has a hollow cylindrical structure and opposite open ends. One end of the micro-drive mechanism 8 is attached to a hollow annular objective lens 3 which is one component of the optical microscope 1. The hollow objective lens 3 has an opening around its optical or centre axis. A needle attachment piece 6b is fixed in the opening of the hollow objective lens 3, and the needle 6, ie the measurement needle of the scanning tunnelling microscope, is fixed to the attachment piece 6b by a screw or other fitting so that the axis of the scanning tunnelling microscope or the centre axis of the needle 6 is coaxially aligned with the optical axis 4 of the centre axis of the optical pass of the optical microscope 1.

An eyepiece 2 of the optical microscope 1 is arranged in axially spaced relation from the other end of the micro-drive mechanism 8.

In the above described construction, the sample surface 7 is advanced towards the needle 6 until the latter is within the tunnelling range and in place for observation by the scanning tunnelling microscope. In this condition, the focal distance of the optical microscope 1 is adjusted clearly to observe the sample surface 7 through the optical microscope 1.

While the image observed by the optical microscope 1 is proportionally darkened because light is blocked by the stem of the needle 6, the stem itself does not appear in the observed image because it is positioned far away from the focal plane of the sample surface 7.

Next, with regard to the observed image of the tip of the needle 6 by the optical microscope 1, generally the optical microscope has a focal depth at least of the order of several micrometers such that the optical microscope can observe an object within a axial range of several micrometers relative to the sample surface 7 while the focal plane is adjusted to the sample surface. In this regard, the tip end of the needle 6 is positioned in a range of nanometers from the sample surface 7 such that the tip end is substantially focused by the optical microscope. However, the tip end of the needle 6 is small compared to the resolution power of the optical microscope 1. Thus an actual image of a tip end of the needle 6 cannot be obtained. On the other hand, a peripheral portion of the needle 6 axially spaced from the tip by the order of several micrometers has a diameter sufficient to be observed. Therefore, this peripheral portion of the needle 6 within the focal depth can be clearly observed. The image of this peripheral portion observed by the optical microscope 1 is seen in superposed relation to the initially focused image of the sample surface 7. Then, measurement by the scanning tunnelling microscope can be carried out onto the superposed image area of the sample surface 7 to which the tip of the needle 6 is directed.

Further, with regard to offset of the tip of the needle 6 in the direction of sample surface 7, which would occur everytime the needle was replaced, the amount of offset is normally limited within the observation field of the optical microscope 1, and the axis of the scanning tunnel microscope or the centre axis of the needle is not substantially inclined from the optical axis 4. Therefore, in a manner comparable to the ideal state where the axis of the scanning tunnelling microscope is exactly aligned with the optical axis, the shadow image of the needle 6 superposed on the image of the sample surface 7 by the optical microscope 1 can represent a target spot to be measured by the scanning tunnelling microscope.

As described above, a target spot for observation by the scanning tunnelling microscope can be accurately recognised by the optical microscope, thereby enabling an accurate alignment of the target spot through the optical microscope. Further, the invention can eliminate the considerable work of adjustment or alignment of replacement needles and extremely high machining accuracy for complex structures.

## Claims (Claims for the following Contracting State(s): DE, GB, FR)

1. A scanning tunnelling microscope in combination with an optical microscope (1), a probe needle (6) of the scanning tunnelling microscope being disposed in alignment with the optical axis (4) of the optical microscope (1), characterised in that the optical microscope (1) has a lens sleeve (1a) and an objective lens (3) provided at one end of the lens sleeve and said objective lens formed with a central opening (3a), an electrostriction element (5) of the scanning tunnelling microscope being mounted in the opening and carrying the needle (6).

2. A scanning tunnelling microscope as claimed in claim 1 characterised in that the electrostriction element (5) has a portion connected to driving electrode means (6X, 6Y, 6Z) and a portion fixed in the opening (3a) of the objective lens (3).

3. A scanning tunnelling microscope as claimed in claim 2 characterised in that the electrostriction element (5) is formed with a driving electrode disposed between the objective lens (3) and the needle (6).

## Claims (Claims for the following Contracting State(s): LI, CH)

1. A scanning tunnelling microscope in combination with an optical microscope (1), a probe needle (6) of the scanning tunnelling microscope being disposed in alignment with the optical axis (4) of the optical microscope (1), characterised in that the optical microscope (1) has a lens sleeve (1a) and an objective lens (3) provided at one end of the lens sleeve and said objective lens formed with a central opening (3a), an electrostriction element (5) of the scanning tunnelling microscope being mounted in the opening and carrying the needle (6).

2. A scanning tunnelling microscope as claimed in claim 1 characterised in that the electrostriction element (5) has a portion connected to driving electrode means (6X, 6Y, 6Z) and a portion fixed in the opening (3a) of the objective lens (3).

3. A scanning tunnelling microscope as claimed in claim 2 characterised in that the electrostriction element (5) is formed with a driving electrode disposed between the objective lens (3) and the needle (6).

4. A scanning tunnelling microscope in combination with an optical microscope (1), a probe needle (6) of the scanning tunnelling microscope being disposed in alignment with the optical axis (4) of the optical microscope (1), characterised in that the optical microscope (1) has a lens sleeve (1a) and an objective lens (3) provided at one end of the lens sleeve and said objective lens formed with a central opening (3a), an electrostriction element (5) of the scanning tunnelling microscope being mounted on the lens sleeve (1a), the needle (6). being mounted in the opening (3a) of the objective lens (3).

## Patentansprüche (Patentansprüche für folgende(n) Vertragsstaat(en): DE, FR, GB)

1. Raster-Tunnel-Mikroskop in Verbindung mit einem optischen Mikroskop (1), wobei eine Sondennadel (6) des Raster-Tunnel-Mikroskops ausgerichtet zur optischen Achse (4) des optischen Mikroskops (1) angeordnet ist, **dadurch gekennzeichnet,** daß das optische Mikroskop (1) eine Linsenhülse (1a) und eine an einem Ende der Linsenhülse vorgesehene Objektivlinse (3) besitzt und die Objektivlinse mit einer zentralen Öffnung (3a) ausgebildet ist, und daß ein Elektrostriktionselement (5) des Raster-Tunnel-Mikroskops in der Öffnung montiert ist und die Nadel (6) trägt.

2. Raster-Tunnel-Mikroskop nach Anspruch 1, **dadurch gekennzeichnet,** daß das Elektrostriktionselement (5) einen mit Treiberelektrodenmitteln (6X, 6Y, 6Z) verbundenem Teil und einen in der Öffnung (3a) der Objektivlinse (3) befestigten Teil besitzt.

3. Raster-Tunnel-Mikroskop nach Anspruch 2, **dadurch gekennzeichnet,** daß das Elektrostriktionselement (5) mit einer zwischen der Objektivlinse (3) und der Nadel (6) angeordneten Treiberelektrode ausgebildet ist.

## Patentansprüche (Patentansprüche für folgende(n) Vertragsstaat(en): CH, LI)

1. Raster-Tunnel-Mikroskop in Verbindung mit einem optischen Mikroskop (1), wobei eine Sondennadel (6) des Raster-Tunnel-Mikroskops ausgerichtet zur optischen Achse (4) des optischen Mikroskops (1) angeordnet ist, **dadurch gekennzeichnet,** daß das optische Mikroskop (1) eine Linsenhülse (1a) und eine an einem Ende der Linsenhülse vorgesehene Objektivlinse (3) besitzt und die Objektivlinse mit einer zentralen Öffnung (3a) ausgebildet ist, und daß ein Elektrostriktionselement (5) des Raster-Tunnel-Mikroskops in der Öffnung montiert ist und die Nadel (6) trägt.

2. Raster-Tunnel-Mikroskop nach Anspruch 1, **dadurch gekennzeichnet,** daß das Elektrostriktionselement (5) einen mit Treiberelektrodenmitteln (6X, 6Y, 6Z) verbundenem Teil und einen in der Öffnung (3a) der Objektivlinse (3) befestigten Teil besitzt.

3. Raster-Tunnel-Mikroskop nach Anspruch 2, **dadurch gekennzeichnet,** daß das Elektrostriktionselement (5) mit einer zwischen der Objektivlinse (3) und der Nadel (6) angeordneten Treiberelektrode ausgebildet ist.

4. Raster-Tunnel-Mikroskop in Kombination mit einem optischen Mikroskop (1), wobei eine Sondennadel (6) des Abtast-Tunnel-Mikroskops zur optischen Achse (4) des optischen Mikroskops (1) ausgerichtet angeordnet ist, **dadurch gekennzeichnet,** daß das optische Mikroskop (1) eine Linsenhülse (1a) und eine an einem Ende der Linsenhülse vorgesehene Objektivlinse (3) besitzt und die Objektivlinse mit einer zentralen Öffnung (3a) ausgebildet ist, daß ein Elektrostriktionselement (5) des Raster-Tunnel-Mikroskops auf der Linsenhülse (1a) montiert ist, und daß die Nadel (6) in der Öffnung (3a) der Objektivlinse (3) montiert ist.

## Revendications (Revendications pour l'(les) Etat(s) contractant(s) suivant(s): DE, GB, FR)

1. Un microscope à effet tunnel à balayage, en combinaison avec un microscope optique (1), dans lequel une aiguille de sonde (6) du microscope à effet tunnel à balayage est disposée en alignement avec l'axe optique (4) du microscope optique (1), caractérisé en ce que le microscope optique (1) comporte une douille porte-lentilles (1a) et un objectif (3) placé à une extrémité de la douille porte-lentilles, et cet objectif comporte une ouverture centrale (3a), un élément à électrostriction (5) du microscope à effet tunnel à balayage étant monté dans l'ouverture et portant l'aiguille (6).

2. Un microscope à effet tunnel à balayage selon la revendication 1, caractérisé en ce que l'élément à électrostriction (5) comporte une partie connectée à une structure d'électrodes de déplacement (6X, 6Y, 6Z) et une partie fixée dans l'ouverture (3a) de l'objectif (3).

3. Un microscope à effet tunnel à balayage selon la revendication 1, caractérisé en ce que l'élément à électrostriction (5) comporte une électrode de déplacement qui est disposée entre l'objectif (3) et l'aiguille (6).

## Revendications (Revendications pour l'(les) Etat(s) contractant(s) suivant(s): LI, CH)

1. Un microscope à effet tunnel à balayage, en combinaison avec un microscope optique (1), dans lequel une aiguille de sonde (6) du microscope à effet tunnel à balayage est disposée en alignement avec l'axe optique (4) du microscope optique (1), caractérisé en ce que le microscope optique (1) comporte une douille porte-lentilles (1a) et un objectif (3) placé à une extrémité de la douille porte-lentilles, et cet objectif comporte une ouverture centrale (3a), un élément à électrostriction (5) du microscope à effet tunnel à balayage étant monté dans l'ouverture et portant l'aiguille (6).

2. Un microscope à effet tunnel à balayage selon la revendication 1, caractérisé en ce que l'élément à électrostriction (5) comporte une partie connectée à une structure d'électrodes de déplacement (6X, 6Y, 6Z) et une partie fixée dans l'ouverture (3a) de l'objectif(3).

3. Un microscope à effet tunnel à balayage selon la revendication 1, caractérisé en ce que l'élément à électrostriction (5) comporte une électrode de déplacement qui est disposée entre l'objet (3) et l'aiguille (6).

4. Un microscope à effet tunnel à balayage, en combinaison avec un microscope optique (1), dans lequel une aiguille de sonde (6) du microscope à effet tunnel à balayage est disposée en alignement avec l'axe optique (4) du microscope optique (1), caractérisé en ce que le microscope optique (1) comporte une douille porte-lentilles (1a) et un objectif (3) placé à une extrémité de la douille porte-lentilles, et cet objectif comporte une ouverture centrale (3a), un élément à électrostriction (5) du microscope à effet tunnel à balayage étant monté sur la douille porte-lentilles (1a), et l'aiguille (6) étant montée dans l'ouverture (3a) de l'objectif (3).
